# FASCICULE DE BREVET EUROPEEN

(11) **EP 2 501 613 B1**
(45) Date de publication et mention de la délivrance du brevet: **16.10.2013**
(21) Numéro de dépôt: 10792997.8
(22) Date de dépôt: 16.11.2010
(51) Int. Cl.: B64D 27/26, F02C 7/32

(54) **MONTAGE D'UN BOITIER D'ACCESSOIRES SUR UN CARTER INTERMEDIAIRE POUR COMPARTIMENT DE SOUFFLANTE DE TURBOREACTEUR**
EINBAU DES HILFSAGGREGATSGETRIEBES AN DEM KERNTRIEBWERKSGEHÄUSE
MOUNTING OF ACCESSSORY GEARBOX ON INTERMEDIATE FAN CASE

(30) Priorité: 17.11.2009 FR 0958105
(43) Date de publication de la demande: 26.09.2012
(73) Titulaire: SNECMA, 75015 Paris (FR)
(72) Inventeur: FERT, Jérémy, Edmond, F-75020 Paris (FR)
(74) Mandataire: Boura, Olivier
(86) Numéro de dépôt international: PCT/FR2010/052431
(87) Numéro de publication internationale: WO 2011/061437

(56) Documents cités:
- EP-A1- 2 082 961
- EP-A2- 1 008 738
- US-A1- 2006 248 900

## Description

### Arrière-plan de l'invention

La présente invention se rapporte au domaine général du montage sur un turboréacteur du boîtier pour l'entraînement d'accessoires.

Dans un turboréacteur, les accessoires tels que les pompes pour la production d'énergie hydraulique, l'alimentation en carburant et la lubrification, les générateurs électriques pour la production de puissance électrique, etc. sont regroupés au sein d'un boîtier communément appelé AGB (pour « Accessory GearBox »). Un tel boîtier comprend généralement un ou plusieurs des trains d'engrenages qui sont entraînés en rotation par un prélèvement de puissance sur un arbre du turboréacteur et sur lesquels viennent se coupler les différents accessoires.

Dans les turboréacteurs de la famille CFM^{®}, les boîtiers d'accessoires sont généralement montés dans la zone du compartiment de soufflante. Ils sont plus précisément suspendus à des brides formées sur le carter métallique de rétention de ce compartiment de soufflante.

Les carters de rétention des compartiments de soufflante sont toutefois de plus en plus fréquemment réalisés en matériau composite dans le but de gagner de la masse. Or, former des brides permettant l'accrochage d'un boîtier d'accessoires n'est pas aisément réalisable sur de tels carters en matériau composite.

Par ailleurs, les avionneurs exigent que les turboréacteurs fournissent une puissance électrique qui est toujours plus élevée, ce qui se traduit généralement par l'installation sur le boîtier d'accessoires de deux générateurs électriques volumineux. Il en résulte, pour un boîtier d'accessoires monté dans la zone du compartiment de soufflante, un gonflement de la nacelle du turboréacteur au droit de ce boîtier pour limiter la surface frontale de la nacelle. Ce gonflement engendre néanmoins des chocs aérodynamiques très pénalisants en termes de performance.

Pour résoudre ces problèmes, il est connu de monter le boîtier d'accessoires dans le compartiment « core » (ou compartiment central) du turboréacteur, et plus particulièrement autour du compresseur haute-pression du turboréacteur. Ce type de montage pose toutefois des difficultés techniques. En particulier, l'installation d'une charge importante sur le carter du compresseur haute-pression du turboréacteur risque de dégrader les performances de celui-ci à cause d'un phénomène d'ovalisation du carter (l'ovalisation est d'autant plus sensible que le diamètre du carter du compresseur est petit). En outre, la présence de tubes d'air pour la décharge d'air en amont du compresseur haute-pression lors de certaines phases de vol limite les possibilités d'accrochage du boîtier d'accessoires sur des composants du compartiment core autres que le carter du compresseur haute-pression.

US 2006/0248900 décrit un boîtier d'accessoires de l'art antérieur et EP 2,082,961 divulgue un carter intermédiaire selon le préambule de la revendication 1.

### Objet et résumé de l'invention

La présente invention a donc pour but principal de pallier de tels inconvénients en proposant un montage du boîtier d'accessoires dans le compartiment core du turboréacteur qui ne dégrade pas les performances du compresseur haute-pression du turboréacteur.

Ce but est atteint grâce à un carter intermédiaire pour compartiment de soufflante de turboréacteur, comportant :
une virole centrée sur un axe longitudinal de la turbomachine ;
un flasque annulaire centré sur l'axe longitudinal de la turbomachine et monté contre une face aval de la virole ;
une poutre de suspension fixée sur le flasque et s'étendant vers l'aval parallèlement à l'axe longitudinal de la turbomachine ; et
un boîtier d'accessoires suspendu à la poutre et comprenant une face latérale amont espacée axialement du flasque, une face latérale aval opposée à la face latérale amont, et une pluralité d'accessoires montés contre sa face latérale aval et répartis autour de l'axe longitudinal de la turbomachine.

Le carter intermédiaire d'un turboréacteur est positionné entre le compresseur basse-pression et le compresseur haute-pression. Aussi, le boîtier d'accessoires qui est suspendu à une poutre fixée sur le flasque du carter intermédiaire peut être disposé autour du compresseur haute-pression du turboréacteur sans être fixé directement sur celui-ci. Tout risque de dégradation des performances du carter du compresseur haute-pression par ovalisation est ainsi écarté. Par ailleurs, le montage du boîtier d'accessoires selon l'invention permet d'écarter le boîtier d'accessoires du flasque du carter intermédiaire de façon à pouvoir laisser un espace pour le passage des tubes d'air pour la décharge d'air en amont du compresseur haute-pression.

Selon une disposition avantageuse, le boîtier d'accessoires est fixé à une extrémité à la poutre et à l'extrémité opposée à une chape fixée sur le flasque, le carter comportant en outre un boîtier carburant fixé à une extrémité à la chape du flasque et à l'extrémité opposée à la poutre. L'ajout du boîtier carburant permet ainsi de former avec le boîtier d'accessoires un anneau complet centré sur l'axe longitudinal du turboréacteur, ce qui facilite l'optimisation de l'équilibre des masses autour de cet axe longitudinal. Par ailleurs, chaque boîtier peut être démonté indépendamment de l'autre, ce qui facilite leur maintenance.

Dans ce cas, le boîtier carburant peut comporter une face latérale amont espacée axialement du flasque, une face latérale aval opposée à la face latérale amont, et une pluralité d'équipements carburant montés contre sa face latérale aval.

De préférence, le boîtier d'accessoires comprend en outre une boîte de transfert montée contre sa face latérale amont.

De préférence encore, le carter comprend en outre au moins une bielle de reprise d'effort axial fixée à une extrémité sur le flasque et à l'extrémité opposée sur la face latérale amont du boîtier d'accessoires.

Les accessoires du boîtier peuvent comporter : au moins un générateur électrique pour fournir de la puissance électrique à l'avion ; un alternateur pour fournir du courant électrique à des équipements électriques de la turbomachine ; un démarreur pour mettre en route la turbomachine ; au moins une pompe hydraulique pour fournir de la puissance hydraulique à l'avion ; une pompe à carburant ; et une pompe de lubrification.

L'invention concerne également un compartiment de soufflante de turboréacteur, comportant un carter de rétention centré sur l'axe longitudinal de la turbomachine et un carter intermédiaire tel que défini précédemment et fixé au carter de rétention.

L'invention concerne encore un turboréacteur comportant un carter intermédiaire tel que défini ci-dessus.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue de côté d'un turboréacteur équipé d'un carter intermédiaire selon l'invention ; et
- la figure 2 est une vue en coupe selon II-II de la figure 1.

### Description détaillée d'un mode de réalisation

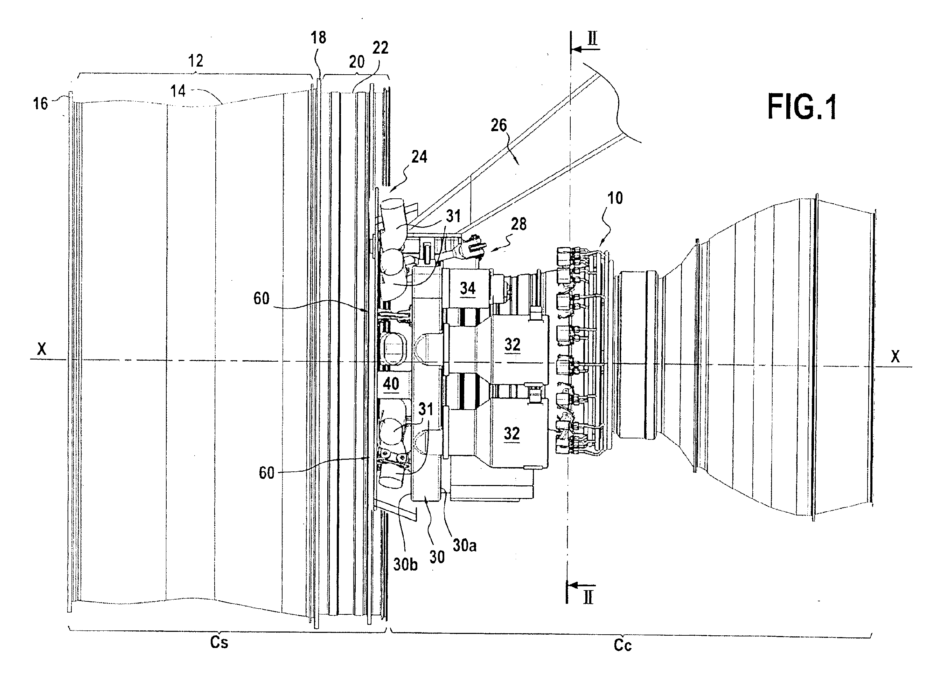

La figure 1 représente en vue de côté un turboréacteur 10 du type à double corps et double flux équipé d'un carter intermédiaire selon l'invention. Bien entendu, le domaine d'application de l'invention s'étend à d'autres types de turboréacteur.

De façon connue en soi, un tel turboréacteur 10 se compose d'un compartiment amont dans lequel est logé la soufflante, également appelé compartiment de soufflante C_{S}, et un compartiment aval dans lequel est logé le reste du turboréacteur, également appelé compartiment « core » C_{C} (ou compartiment central).

Plus précisément, le compartiment de soufflante C_{S} comprend un carter de rétention 12 qui est constitué d'une virole 14 (préférentiellement réalisée en matériau composite) centrée sur l'axe longitudinal X-X du turboréacteur et munie à ses deux extrémités de brides, à savoir une bride amont 16 et une bride aval 18.

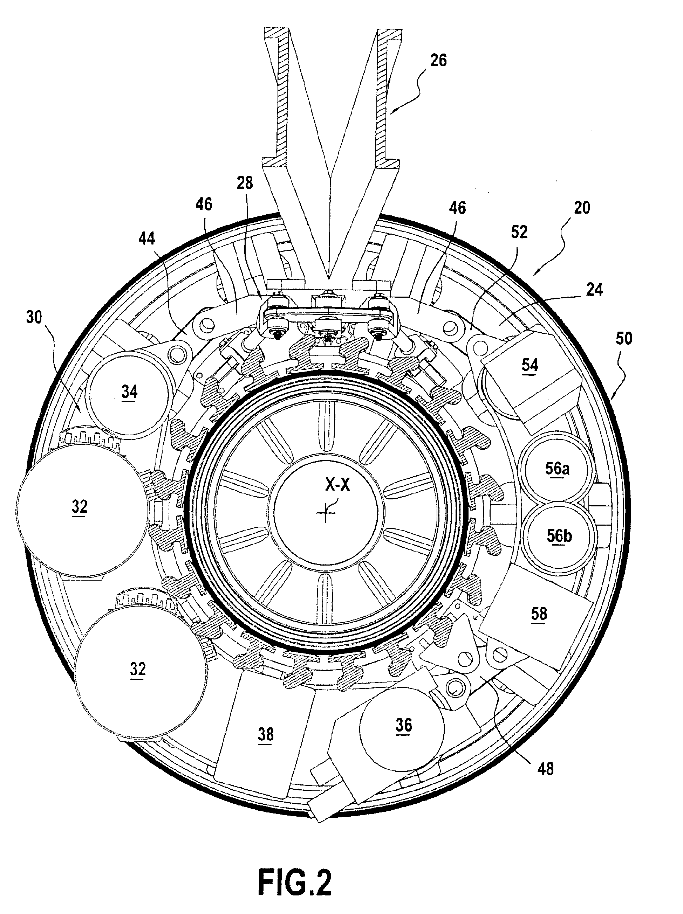

Le compartiment de soufflante comprend également un carter intermédiaire 20 fixé sur la bride aval 18 du carter de rétention 12. Ce carter intermédiaire est constitué d'une virole métallique 22 qui est centrée sur l'axe longitudinal X-X du turboréacteur et d'un flasque annulaire 24 également centré sur l'axe longitudinal X-X et monté contre une face aval de la virole 22 (figure 2).

Par ailleurs, le turboréacteur 10 est suspendu à une aile d'avion (non représentée) au moyen d'un pylône 26, ce dernier étant lié au turboréacteur par l'intermédiaire d'une poutre de suspension 28 fixée sur le flasque 24 du carter intermédiaire 20. Cette poutre de suspension s'étend vers l'aval parallèlement à l'axe longitudinal X-X du turboréacteur.

Selon l'invention, il est prévu d'utiliser cette poutre de suspension 28 destinée à la fixation du pylône 26 pour y suspendre le boîtier d'accessoires 30 du turboréacteur (également appelé AGB pour « Accessories Gear Box »), le boîtier d'accessoires étant plus précisément positionné autour du compresseur haute-pression du turboréacteur.

Le boîtier d'accessoires 30 comprend une face latérale aval 30a sensiblement plane et une face latérale amont 30b sensiblement plane et opposée à la face latérale aval. La présence de la poutre de suspension permet d'espacer axialement le boîtier d'accessoires du flasque du carter intermédiaire. Ainsi, l'espace qui est laissé entre ces deux éléments permet le passage des tubes d'air 31 pour la décharge d'air en amont du compresseur haute-pression du turboréacteur.

Par ailleurs, le boîtier d'accessoires 30 renferme un ou plusieurs trains d'engrenages (non représentés) qui sont entraînés en rotation par un prélèvement de puissance sur un arbre du turboréacteur. Une pluralité d'accessoires sont montés contre la face latérale aval 30a du boîtier 30 et présentent chacun un arbre d'entraînement qui est couplé à l'un des engrenages du boîtier. Ces arbres d'entraînement, non représentés sur les figures, s'étendent selon une direction sensiblement parallèle à l'axe longitudinal X-X.

Parmi ces accessoires, il est prévu deux générateurs électriques 32 pour fournir de la puissance électrique à l'avion, un alternateur 34 pour fournir du courant électrique à des équipements électriques de la turbomachine, un démarreur (non représenté) pour mettre en route le turboréacteur, une pompe hydraulique (non représentée) pour fournir de la puissance hydraulique à l'avion, une pompe à carburant 36, et une pompe de lubrification 38. Bien entendu, d'autres accessoires que ceux mentionnés ci-dessus peuvent être montés sur le boîtier d'accessoires.

Par ailleurs, le boîtier d'accessoires 30 comprend une boîte de transfert 40 (figure 2) par laquelle transite l'arbre de prélèvement de puissance sur l'arbre du turboréacteur permettant d'entraîner les différents accessoires. Cette boîte de transfert 40 est de préférence montée contre la face latérale amont 30b du boîtier d'accessoires.

A l'une de ses extrémités, le boîtier d'accessoires 30 est fixé à une bielle de suspension 44, cette bielle de suspension étant elle-même fixée à une barre transversale 46 formant palonnier et solidaire de la poutre de suspension 28. A l'extrémité opposée, le boîtier d'accessoires 30 est relié à une chape 48 fixée sur le flasque 24 du carter intermédiaire 20.

Selon une disposition particulièrement avantageuse de l'invention, le carter intermédiaire comporte en outre un boîtier carburant 50 (également appelé bloc carburant) qui est fixé, à une extrémité à la chape 48 du flasque 24, et à l'extrémité opposée à la poutre de suspension 28 (via une bielle de suspension 52 fixée sur la barre transversale 46).

Le boîtier carburant 50 comporte une face latérale amont espacée axialement du flasque, une face latérale aval opposée à la face latérale amont, et une pluralité d'équipements carburant montés contre sa face latérale aval. De tels équipements comprennent par exemple un bloc de contrôle de servovalves d'actionneurs 54, un groupe d'échangeurs et filtres huile/carburant 56a, 56b et un doseur de carburant 58.

Le boîtier d'accessoires 30 et le boîtier carburant 50 forment ainsi un anneau complet qui est centré sur l'axe longitudinal X-X du turboréacteur. Les accessoires/équipements de cet ensemble sont répartis autour de cet axe longitudinal X-X et disposés autour du compartiment core du turboréacteur, et plus particulièrement autour du compresseur haute-pression. Ainsi, l'équilibre des masses autour de l'axe longitudinal X-X peut être optimisé. En outre, chaque boîtier peut être démonté indépendamment de l'autre, ce qui facilite leur maintenance.

Comme représenté sur la figure 1, des bielles 60 de reprise d'effort axial peuvent être fixées à une extrémité sur le flasque 24 du carter intermédiaire et à l'extrémité opposée sur la face latérale amont 30b du boîtier d'accessoires 30.

Dans la description qui vient d'être faite du carter intermédiaire selon l'invention, le boîtier d'accessoires est suspendu à une poutre de suspension qui est normalement utilisée pour la fixation du pylône. Un tel mode de réalisation présente l'avantage que la poutre de suspension pour la fixation du pylône est dimensionnée pour des cas de charges bien supérieures à la suspension du boîtier d'accessoires. Par ailleurs, cette poutre de suspension étant déjà présente, la modification de sa géométrie aura un impact minime sur la masse globale du turboréacteur.

Certains turboréacteurs ont toutefois un système différent d'accrochage du pylône dans lequel il n'est pas prévu de poutre de suspension fixée sur le carter intermédiaire du compartiment de soufflante. Dans ce cas, il est bien entendu évident qu'une telle poutre de suspension pourra être installée sur le flasque du carter intermédiaire afin d'y suspendre le boîtier d'accessoires selon le montage conforme à l'invention.

## Revendications

1. Carter intermédiaire (20) pour compartiment de soufflante (C_{S}) de turboréacteur, comportant :
une virole (22) centrée sur un axe longitudinal (X-X) de la turbomachine ;
un flasque annulaire (24) centré sur l'axe longitudinal de la turbomachine et monté contre une face aval de la virole ; et
une poutre de suspension (28) fixée sur le flasque et s'étendant parallèlement à l'axe longitudinal de la turbomachine vers l'aval ; **caractérisé en ce qu'**il comporte en outre un boîtier d'accessoires (30) suspendu à la poutre et comprenant une face latérale amont (30b) espacée axialement du flasque, une face latérale aval (30a) opposée à la face latérale amont, et une pluralité d'accessoires (32-38) montés contre sa face latérale aval et répartis autour de l'axe longitudinal de la turbomachine.

2. Carter selon la revendication 1, dans lequel le boîtier d'accessoires (30) est fixé à une extrémité à la poutre (28) et à l'extrémité opposée à une chape (48) fixée sur le flasque (24), le carter comportant en outre un boîtier carburant (50) fixé à une extrémité à la chape du flasque et à l'extrémité opposée à la poutre.

3. Carter selon la revendication 2, dans lequel le boîtier carburant (50) comporte une face latérale amont espacée axialement du flasque, une face latérale aval opposée à la face latérale amont, et une pluralité d'équipements carburant montés contre sa face latérale aval.

4. Carter selon l'une quelconque des revendications 1 à 3, dans lequel le boîtier d'accessoires (30) comprend en outre une boîte de transfert (40) montée contre sa face latérale amont (30b).

5. Carter selon l'une quelconque des revendications 1 à 4, comprenant en outre au moins une bielle (60) de reprise d'effort axial fixée à une extrémité sur le flasque (24) et à l'extrémité opposée sur la face latérale amont (30b) du boîtier d'accessoires (30).

6. Carter selon l'une quelconque des revendications 1 à 5, dans lequel les accessoires comportent : au moins un générateur électrique (32) pour fournir de la puissance électrique à l'avion ; un alternateur (34) pour fournir du courant électrique à des équipements électriques de la turbomachine ; un démarreur pour mettre en route la turbomachine ; au moins une pompe hydraulique pour fournir de la puissance hydraulique à l'avion ; une pompe à carburant (36) ; et une pompe de lubrification (38).

7. Compartiment de soufflante (C_{S}) de turboréacteur, comportant un carter de rétention (12) centré sur l'axe longitudinal de la turbomachine et un carter intermédiaire (20) selon l'une quelconque des revendications 1 à 6, le carter intermédiaire étant fixé au carter de rétention.

8. Turboréacteur (10) comportant un carter intermédiaire (20) selon l'une quelconque des revendications 1 à 6.

## Patentansprüche

1. Zwischengehäuse (20) für einen Gebläseteil (C_{S}) eines Turbostrahltriebwerks, umfassend:
einen Ring (22), der um eine Längsachse (X-X) der Turbomaschine zentriert ist,
einen ringförmigen Flansch (24), der um die Längsachse der Turbomaschine zentriert und an einer stromabwärtigen Fläche des Rings angebracht ist, und
einen Aufhängeträger (28), der an dem Flansch befestigt ist und sich parallel zur Längsachse der Turbomaschine stromabwärts erstreckt,
**dadurch gekennzeichnet, dass** es ferner einen Hilfsgeräteantrieb (30) umfasst, der an dem Träger aufgehängt ist und eine stromaufwärtige Seitenfläche (30b), die von dem Flansch axial beabstandet ist, eine der stromaufwärtigen Seitenfläche gegenüberliegende stromabwärtige Seitenfläche (30a) sowie eine Vielzahl von Hilfsgeräten (32-38) umfasst, die an seiner stromabwärtigen Seitenfläche angebracht und um die Längsachse der Turbomaschine verteilt sind.

2. Gehäuse nach Anspruch 1, wobei der Hilfsgeräteantrieb (30) an einem Ende an dem Träger (28) und an dem gegenüberliegenden Ende an einem an dem Flansch (24) befestigten Bügel (48) befestigt ist, wobei das Gehäuse ferner ein Treibstofifgehäuse (50) umfasst, das an einem Ende an dem Bügel des Flansches und an dem gegenüberliegenden Ende an dem Träger befestigt ist.

3. Gehäuse nach Anspruch 2, wobei das Treibstoffgehäuse (50) eine stromaufwärtige Seitenfläche, welche von dem Flansch axial beabstandet ist, eine der stromaufwärtigen Seitenfläche gegenüberliegende stromabwärtige Seitenfläche sowie eine Vielzahl von Treibstoffeinrichtungen, die an seiner stromabwärtigen Seitenfläche angebracht sind, umfasst.

4. Gehäuse nach einem der Ansprüche 1 bis 3, wobei der Hilfsgeräteantrieb (30) ferner ein Zwischengetriebe (40), das an seiner stromaufwärtigen Seitenfläche (30b) angebracht ist, umfasst.

5. Gehäuse nach einem der Ansprüche 1 bis 4, ferner umfassend wenigstens eine Stange (60) zur Axialkraftübernahme, die an einem Ende an dem Flansch (24) und an dem gegenüberliegenden Ende an der stromaufwärtigen Seitenfläche (30b) des Hilfsgeräteantriebs (30) befestigt ist.

6. Gehäuse nach einem der Ansprüche 1 bis 5, wobei die Hilfsgeräte umfassen:
wenigstens einen elektrischen Generator (32), um dem Flugzeug elektrische Leistung bereitzustellen; einen Wechselstromgenerator (34), um elektrischen Einrichtungen der Turbomaschine elektrischen Strom bereitzustellen; einen Starter, um die Turbomaschine anlaufen zu lassen; wenigstens eine Hydraulikpumpe, um dem Flugzeug hydraulische Leistung bereitzustellen; eine Treibstoffpumpe (36) sowie eine Schmiermittelpumpe (38).

7. Gebläseteil (C_{S}) eines Turbostrahltriebwerks, umfassend ein Haltegehäuse (12), das um die Längsachse der Turbomaschine zentriert ist, und ein Zwischengehäuse (20) nach einem der Ansprüche 1 bis 6, wobei das Zwischengehäuse an dem Haltegehäuse befestigt ist.

8. Turbostrahltriebwerk (10), das ein Zwischengehäuse (20) nach einem der Ansprüche 1 bis 6 umfasst.

## Claims

1. An intermediate casing (20) for a turbojet fan compartment (C_{S}), comprising:
· a shroud (22) centered along a longitudinal axis (X-X) of the turbine engine;
· an annular cheek plate (24) centered along the longitudinal axis of the turbine engine and mounted against a downstream face of the shroud; and
· a suspension beam (28) fastened to the cheek plate and extending downstream parallel to the longitudinal axis of the turbine engine; **characterised in that** it further comprises an auxiliary gearbox (30) suspended from the beam and comprising an upstream side face (30b) spaced apart axially from the cheek plate, a downstream side face (30a) opposite the upstream side face, and a plurality of accessories (32-38) mounted against its downstream side face and distributed about the longitudinal axis of the turbine engine.

2. A casing according to claim 1, wherein the auxiliary gearbox (30) is fastened at one end to the beam (28) and at its opposite end to a yoke (48) that is fastened to the cheek plate (24), the casing further comprising a fuel unit (50) fastened at one end to the yoke of the cheek plate and at its opposite end to the beam.

3. A casing according to claim 2, wherein the fuel unit (50) comprises an upstream side face spaced apart axially from the cheek plate, a downstream side face opposite the upstream side face, and a plurality of pieces of fuel-handling equipment mounted against its downstream side face.

4. A casing according to any one of claims 1 to 3, wherein the auxiliary gearbox (30) further comprises a transfer unit (40) mounted against its upstream side face (30b).

5. A casing according to any one of claims 1 to 4, further comprising at least one axial force take-up link (60) fastened at one end to the cheek plate (24) and at its opposite end to the upstream side face (30b) of the auxiliary gearbox (30).

6. A casing according to any one of claims 1 to 5, wherein the accessories comprise: at least one electricity generator (32) for supplying electrical power to the airplane; an alternator (34) for supplying electricity to electrical equipment of the turbine engine; a starter for starting the turbine engine; at least one hydraulic pump for supplying hydraulic power to the airplane; a fuel pump (36); and a lubricant pump (38).

7. A fan compartment (C_{S}) for a turbojet comprising a containment casing (12) centered on the longitudinal axis of the turbine engine and an intermediate casing (20) according to any one of claims 1 to 6, the intermediate casing being fastened to the containment casing.

8. A turbojet (10) including an intermediate casing (20) according to any one of claims 1 to 6.
